# EUROPEAN PATENT APPLICATION

(11) **EP 2 450 133 A1**
(43) Date of publication of application: **09.05.2012**
(21) Application number: 10793850.8
(22) Date of filing: 30.06.2010
(51) Int. Cl.: B22F 9/24, B01J 23/44, B01J 35/02, B22F 1/02, C02F 1/58

(54) **NOBLE METAL COLLOIDAL PARTICLES, NOBLE METAL COLLOIDAL SOLUTION, AND CATALYST FOR HYDROGEN PEROXIDE DECOMPOSITION**

(30) Priority: 01.07.2009 JP 2009156825
(71) Applicant: Nippon Sheet Glass Company Limited, Tokyo 108-6321 (JP)
(72) Inventor: YOSHII, Tetsuro, Tokyo 108-6321 (JP); HORIGUCHI, Haruko, Tokyo 108-6321 (JP)
(74) Representative: Hart-Davis, Jason
(86) International application number: PCT/JP2010/004316
(87) International publication number: WO 2011/001677

(57) **Abstract**

The noble metal colloidal particles of the present invention are noble metal colloidal particles each including: a Pd colloidal particle; and Pt supported on the surface of the Pd colloidal particle. The noble metal colloidal particles are substantially free from a protective colloid. The Pd colloidal particles have an average particle diameter of 7 to 20 nm. The amount of the Pt supported on the surface of the Pd colloidal particle is 0.5 to 2 atomic layers thick, when the amount is expressed as the number of atomic layers of the Pt. The noble metal colloidal solution of the present invention can be obtained by dispersing these noble metal colloidal particles of the present invention in a solvent.

## Description

### TECHNICAL FIELD

The present invention relates to noble metal colloidal particles and a noble metal colloidal solution, and a catalyst for hydrogen peroxide decomposition.

### BACKGROUND ART

Aqueous hydrogen peroxide is widely used for industrial purposes such as treatment of wastewater and cleaning of semiconductors, but it is also used for domestic purposes such as disinfection of contact lenses. However, if wastewater is discharged into a river without removing residual hydrogen peroxide, it may adversely affect the ecosystem of the river. Therefore, it is necessary to decompose and remove hydrogen peroxide remaining in the wastewater. Hydrogen peroxide also remains on disinfected contact lenses, and if such lenses are used without removing residual hydrogen peroxide, they may seriously damage the eyes. Therefore, hydrogen peroxide remaining on the contact lenses must be decomposed and removed completely.

Conventionally, various methods have been proposed to decompose hydrogen peroxide. One example is a well-known method of using colloidal platinum (Pt) catalysts (see, for example, Patent Literature 1 and Non Patent Literature 1).

### CITATION LIST

### Patent Literature

Patent Literature 1 JP 2004-100040 A

### Non Patent Literature

Non Patent Literature 1 TARAMA, Kimio (ed.) "Shokubai Bussei-ron (Study on Physical Properties of Catalysts), Shokubai Kogaku Koza (Lectures on Catalyst Engineering) Vol. 2", p. 271, 1966, Chijin Shokan

### SUMMARY OF INVENTION

### Technical Problem

Since Pt is rare and expensive, it is desirable to reduce the use of Pt. However, since Pt alone cannot achieve high catalytic performance beyond its own ability, a mere reduction of Pt makes it difficult to ensure the decomposition of hydrogen peroxide, which is a problem.

The present invention has been made to solve the above problem. It is an object of the present invention to provide noble metal colloidal particles and a noble metal colloidal solution capable of achieving efficient decomposition of hydrogen peroxide with a smaller amount of Pt. It is another object of the present invention to provide a catalyst for hydrogen peroxide decomposition using such noble metal colloidal particles.

### Solution to Problem

The present invention provides noble metal colloidal particles each including: a Pd colloidal particle; and Pt supported on the surface of the Pd colloidal particle. The noble metal colloidal particles are substantially free from a protective colloid. The Pd colloidal particles have an average particle diameter of 7 to 20 nm. The amount of the Pt supported on the surface of the Pd colloidal particle is 0.5 to 2 atomic layers thick, when the amount is expressed as the number of atomic layers of the Pt.

The present invention also provides a noble metal colloidal solution including: a solvent; and the noble metal colloidal particles of the present invention dispersed in the solvent.

The present invention further provides a catalyst for hydrogen peroxide decomposition, including the noble metal colloidal particles of the present invention.

### Advantageous Effects of Invention

The amount of Pt contained in the noble metal colloidal particles of the present invention is small because only 0.5 to 2 atomic layers thick of Pt is large enough to be supported on the surface of each Pd colloidal particle. Furthermore, the noble metal colloidal particles of the present invention can achieve higher catalytic performance for hydrogen peroxide decomposition than colloidal particles of Pt alone, although the former contains a smaller amount of Pt than the latter. Thus, the noble metal colloidal particles of the present invention can achieve efficient decomposition of hydrogen peroxide with a smaller amount of Pt.
Likewise, a noble metal colloidal solution and a catalyst for hydrogen peroxide decomposition each containing these noble metal colloidal particles can achieve efficient decomposition of hydrogen peroxide with a smaller amount of Pt.

### DESCRIPTION OF EMBODIMENTS

The noble metal colloidal particles of the present invention are each composed of a Pd colloidal particle and Pt supported on the surface of the Pd colloidal particle.

Pt may be partially provided on the surface of the Pd colloidal particle, or may be provided as a Pt layer that covers the entire surface of the Pd colloidal particle. This means that the noble metal colloidal particles of the present invention may have a core-shell structure having a Pd core and a Pt shell. The amount of Pt supported on the surface of the Pd colloidal particle is 0.5 to 2 atomic layers thick, when the amount is expressed as the number of atomic layers of the Pt. As stated herein, the "number of atomic layers" means that Pt in an amount corresponding to the thickness of "n" ("n" is a positive number) atomic layers of Pt is present on the surface of a Pd colloidal particle, assuming that the Pd colloidal particle is spherical. Considering that Pt atoms are cubic close-packed, the thickness of one atomic layer is equal to the diameter of a Pt atom (0.276 nm), the thickness of two atomic layers is equal to (1 + 3^{1/2}/2) × the diameter of a Pt atom, the thickness of three atomic layers is equal to (1 + 3^{1/2}) × the diameter of a Pt atom, and the thickness of "m" ("m" is an integer of 1 or more) atomic layers is equal to (1 + (m - 1) × 3^{1/2}/2) × the diameter of a Pt atom. When the number of atomic layers is less than 1, the amount of Pt corresponding to this thickness is calculated based on the amount of Pt corresponding to the 1 atomic layer thickness. For example, the amount of Pt corresponding to the 0.5 atomic layer thickness is obtained by first calculating the amount of Pt corresponding to the 1 atomic layer thickness and then multiplying the resulting value by 0.5.

With the use of Pt in an amount corresponding to a 0.5 or more atomic layer thickness, the noble metal colloidal particles of the present invention can exhibit sufficient catalytic activity. In order for the noble metal colloidal particles of the present invention to exhibit the catalytic ability of Pt effectively, Pt preferably covers almost the entire surface of the Pd colloidal particle. For example, it is preferable that the amount of Pt supported on the surface of the Pd colloidal particle be 0.75 atomic layer thick or more. When the number of atomic layers is more than 2, the proportion of Pt that is not in contact with a reacting material (i.e., hydrogen peroxide to be decomposed, in the present embodiment) increases, resulting in a decrease in the amount of catalytic activity per unit weight of Pt. That is, more than 2 atomic layers thick of Pt makes it difficult for Pt itself to exhibit its catalytic function efficiently. Therefore, preferably, the amount of Pt is1 atomic layer thick or less so that Pt can exhibit its catalytic function more efficiently.

The Pd colloidal particles have an average particle diameter of 7 to 20 nm. When the average particle diameter of the Pd colloidal particles is less than 7 nm, Pd has poor crystallinity, and Pt supported on the surface of the Pd colloidal particles have poor crystallinity Furthermore, since electrons are not transferred smoothly between the Pd core and Pt, Pt cannot exhibit its catalytic ability effectively. On the other hand, when the average particle diameter of the Pd colloidal particles is more than 20 nm, the surface area per unit weight of the Pd colloidal particles decreases, resulting in an increase in the number of Pd colloidal particles required to have the same surface area, that is, an increase in the concentration of the Pd colloidal particles. Accordingly, the stability of colloidal dispersion decreases. As described above, Pd colloidal particles having an average particle diameter of 7 to 20 nm are used to achieve both high crystallinity and high dispersibility of the Pd colloidal particles. As stated herein, the particle diameter of the Pd colloidal particles is that obtained by dynamic light scattering. Specifically, the backscatter intensity was measured in a noncontact manner with a light scattering photometer (DLS-2000, manufactured by Otsuka Electronics Co., Ltd.) to obtain a scattered light intensity-based particle size distribution, and the particle size corresponding to the 50% cumulative volume in that distribution was defined as an average particle diameter.

The noble metal colloidal particles of the present invention are substantially free from a protective colloid. As stated herein, the phrase "substantially free from a protective colloid" means that the concentration of total carbon in the noble metal colloidal solution is about 200 ppm by mass or less, when the content of a protective colloid forming agent in the noble metal colloidal solution is expressed in terms of the carbon content of the protective colloid forming agent. Generally, since a protein or a polymeric substance is used as a protective colloid forming agent, how much protective colloid forming agent is contained in the noble metal colloidal solution can be expressed by the concentration of total carbon in that noble metal colloidal solution. The protective colloid forming agent is described later. The noble metal colloidal particles of the present invention are substantially free from a protective colloid, as described above. Therefore, the contact area between a reacting material (i.e., hydrogen peroxide to be decomposed, in the present embodiment) and Pt is large enough for Pt to exhibit its catalytic function efficiently

The noble metal colloidal particles of the present invention each have a structure in which Pt is supported on the surface of a Pd colloidal particle. In a comparison between Pd and Pt, Pt is more electron rich than Pd due to the difference in redox potential. Therefore, the noble metal colloidal particles of the present invention have higher reducing power than colloidal particles of Pt alone, and exhibit higher catalytic activity accordingly.

Next, an example of the method of producing the noble metal colloidal particles of the present invention is described. An example of the method for obtaining a noble metal colloidal solution containing a solvent and the noble metal colloidal particles dispersed in the solvent is described below.

First, a Pd salt solution is prepared. A Pd salt and a reducing agent are added to a solvent. A reaction accelerator for accelerating the reduction reaction of the Pd salt may further be added to the solvent. This Pd salt solution is heated to reduce Pd ions contained in the Pd salt. Thus, a dispersion of Pd colloidal particles (i.e., a Pd colloidal solution) is obtained.

Then, the Pd colloidal solution thus obtained is ion-exchanged with an ion exchange resin to remove impurities from the solution.

Next, a Pt salt is added to the Pd colloidal solution to deposit Pt on the surface of the Pd colloidal particles. A reducing agent and a reaction accelerator may further be added. This solution is heated to reduce Pt ions contained in the Pt salt. Thus, Pt is deposited on the surface of the Pd colloidal particles.

Then, the solution thus obtained is ion-exchanged with an ion exchange resin to remove impurities from the solution. Thus, a noble metal colloidal solution in which Pt is supported on the surface of Pd colloidal particles is obtained.

The Pd salt and Pt salt used in the above-mentioned method are not particularly limited as long as they are readily dissolved in a solvent and reduced with a reducing agent. For example, chlorides, nitrates, sulfates, metal complex compounds, etc. of Pd and Pt can be used.

The solvent is not particularly limited as long as it can dissolve a Pd salt, a Pt salt, a reducing agent, and a reaction accelerator. Water, alcohols, ketones, and ethers can be used as the solvent. Water and alcohols are suitably used from the viewpoint of dissolving the Pd salt and Pt salt well. It is desirable to remove oxygen dissolved in the solvent by boiling the solvent well or introducing an inert gas such as nitrogen gas into the solvent before the reducing agent is added thereto. The addition of the Pd salt or the Pt salt to the solvent containing oxygen makes it difficult for the reduction reaction of Pd or Pt to proceed, and colloidal particles are hardly formed.

The reducing agent is not particularly limited as long as it is dissolved in a solvent and reduces a Pd salt and a Pt salt. As the reducing agent, citric acids, alcohols, carboxylic acids, ketones, ethers, aldehydes, esters, etc. can be used. Two or more of them may be used in combination. Examples of citric acids include citric acid and citrates such as sodium citrate, potassium citrate, and ammonium citrate. Examples of alcohols include methanol, ethanol, 1-propanol, 2-propanol, ethylene glycol, and glycerol. Examples of carboxylic acids include formic acid, acetic acid, fumaric acid, malic acid, succinic acid, aspartic acid, gallic acid, ascorbic acid, and carboxylates thereof. Tannic acid, which is a dehydration product of gallic acid and sugar, also can be used suitably. Examples of ketones include acetone and methyl ethyl ketone. Examples of ethers include diethyl ether. Examples of aldehydes include formaldehyde and acetaldehyde. Examples of esters include methyl formate, methyl acetate, and ethyl acetate. Among them, tannic acid, gallic acid, sodium citrate, ascorbic acid, and salts thereof are particularly preferable because of their high reducing power and ease of handling.

As the reaction accelerator, for example, alkali carbonates such as potassium carbonate, alkali hydrogencarbonates such as sodium hydrogencarbonate, and alkali hydroxides such as lithium hydroxide can be used.

Since the noble metal colloidal particles of the present invention are substantially free from protective colloids, they are produced substantially without using a protective colloid forming agent. As stated herein, a protective colloid forming agent is conventionally a substance added to a colloidal solution to maintain the dispersion stability of colloidal particles. It adheres to the surface of the colloidal particles to form protective colloids. Examples of such a protective colloid forming agent include water-soluble polymeric substances such as polyvinyl alcohol, polyvinyl pyrrolidone, and gelatin, surfactants, and polymeric chelating agents. Since the noble metal colloidal particles of the present invention are negatively charged on their surfaces and electrically repel one another, they can maintain the dispersion stability despite the absence of protective colloids.

The noble metal colloidal particles and the noble metal colloidal solution of the present invention can be obtained by the method described above.

Next, the catalyst for hydrogen peroxide decomposition of the present invention is described. The catalyst for hydrogen peroxide decomposition of the present invention includes the noble metal colloidal particles of the present invention. It may be used, as a catalyst for hydrogen peroxide decomposition, in the form of a colloidal solution obtained by dispersing the noble metal colloidal particles of the present invention in a solvent. Furthermore, it also can be used, as a catalyst for hydrogen peroxide decomposition, in the form of carbon particles, oxide particles, an ion exchange resin, or an ion exchange membrane, with the noble metal colloidal particles of the present invention supported thereon.

### EXAMPLES

Hereinafter, the present invention is described in more detail by way of examples, but the present invention is not limited to the following examples as long as it does not depart from the scope thereof.

### (Example 1)

First, a palladium chloride solution was prepared. 1.68 g of palladium chloride (powder) was dissolved in a mixed solution of 20 mL of 3.65 wt% (1 mol/L) hydrochloric acid aqueous solution and 500 mL of pure water, and then the resulting mixture was diluted to 1 liter with pure water. The resulting solution was used as a 1 g/L palladium precursor solution (1 g/L-Pd precursor).

As reducing agents, sodium citrate and tannic acid were used. Specifically, a 10 wt% sodium citrate solution obtained by diluting sodium citrate with pure water and a 1.43 wt% tannic acid solution obtained by diluting tannic acid with pure water were used. As a reaction accelerator, potassium carbonate was used. Specifically, a 13.82 wt% (1 mol/L) potassium carbonate solution obtained by diluting potassium carbonate with pure water was used.

200 g of 1 g/L palladium precursor solution and 730.61 g of pure water were poured into a 1 L round-bottom flask and mixed together. A small amount of 3.65 wt% (1 mol/L) hydrochloric acid solution was add to adjust the pH of the mixed solution to 2.3. The mixed solution was boiled under reflux for one hour. 15 g of sodium citrate solution, 35 g of tannic acid solution, and 1.25 g of potassium carbonate solution were mixed and added thereto. After these solutions were added, the resulting mixed solution was boiled under reflux for 10 minutes, and then the flask was immersed in ice water and cooled to room temperature. Then, the resulting solution was ion-exchanged with 70 g of ion exchange resin (Amberlite MB-1 (manufactured by Organo Corporation)) to remove impurity ions. Thus, a colloidal solution of Pd colloidal particles that would form the core of Pd-Pt colloidal particles was prepared. The particle diameters of the Pd colloidal particles thus obtained were measured by dynamic light scattering to obtain the average particle diameter thereof. Specifically, the backscatter intensity was measured in a noncontact manner with a light scattering photometer (DLS-2000, manufactured by Otsuka Electronics Co., Ltd.) to obtain a scattered light intensity-based particle size distribution, and the particle size corresponding to the 50% cumulative volume in that distribution was defined as an average particle diameter. The average particle diameter of the Pd colloidal particles of the present example was 10 nm.

The Pd colloidal solution prepared and ion-exchanged as described above was entirely poured into a 1 L flask, and boiled under reflux for 30 minutes under stirring with a stirrer. 4.14 g of 4 wt% chloroplatinic acid aqueous solution as the precursor of Pt that would form the shell was added to the mixed solution. After the chloroplatinic acid aqueous solution was added and boiled again, 14 g of 10 wt% sodium citrate solution was added and boiled under reflux for another hour. Then, the flask was immersed in water and cooled to room temperature. Then, the resulting solution was ion-exchanged with 36 g of ion exchange resin (Amberlite MB-1 (manufactured by Organo Corporation)) to remove impurity ions. Thus, a Pd-Pt colloidal solution was obtained.

In the present example, the weight concentration of Pt was determined so that the amount of Pt supported on each of the Pt-Pd colloidal particles contained in the Pd-Pt colloidal solution was 1 atomic layer thick. Specifically, the number of Pd colloidal particles was obtained from the concentration of Pd, and the weight of Pt supported on one Pd colloidal particle was multiplied by the number of Pd colloidal particles to obtain the weight concentration of Pt. For details, see below.

### <Number of core (Pd) colloidal particles>

First, the concentration of the Pd colloidal particles was divided by the weight of one Pd colloid particle to obtain the number of Pd colloidal particles per liter of the solution. Specifically, the number of Pd colloidal particles was obtained in the following manner.

(1) Assuming that the Pd colloidal particles are spherical, the volume of one Pd colloidal particle (V_{Pd}) was calculated using the average particle diameter of 10 nm. The volume (V_{Pd}) was 5.24 × 10⁻²⁵m³ per particle.
(2) The weight of one Pd colloidal particle (m_{Pd}) was calculated from the density of Pd (d_{Pd}) and the volume of the Pd colloidal particle (V_{Pd}). The weight (m_{Pd}) was 6.30 × 10⁻²¹ kg per particle when d_{Pd} = 12030 kg/m³ was used.
(3) The number of Pd colloidal particles per liter (N_{Pd}) was calculated by dividing the Pd concentration (M_{Pd}) by the weight of one Pd colloidal particle (m_{Pd}). The number (N_{Pd} = M_{Pd}/m_{Pd}) was 3.18 × 10¹⁶ per liter. In the present example, the Pd concentration (M_{Pd}) was 200 mg/L.

### <Weight concentration of Pt>

The thickness of Pt was added to the radius of the Pd colloidal particle to obtain the volume of one Pd-Pt colloidal particle (in terms of the spherical volume). The volume of the Pd colloidal particle was subtracted from the resulting volume to obtain the volume of Pt alone. This volume of Pt was multiplied by the density of Pt to obtain the weight of Pt required for one Pd-Pt colloidal particle. Then, the resulting weight was multiplied by the number of Pd colloidal particles per liter of the solution to determine the weight concentration of Pt. Specifically, the weight concentration of Pt was obtained in the following manner.

(1) Since the amount of Pt was 1 atomic layer thick in the present example, the volume of the Pd-Pt colloidal particle (V_{Pd-Pt}) was calculated using 10 nm as the average particle diameter of the Pd colloidal particles and 0.276 nm (2.76 × 10⁻¹⁰ m) as the diameter of a Pt atom. The volume (V_{Pd-Pt}) was 6.15 × 10⁻²⁵m³ per particle.
(2) The volume of the Pd colloidal particle (V_{Pd}) was subtracted from the volume of the Pd-Pt colloidal particle (V_{Pd-Pt}) to obtain the volume of Pt alone (V_{Pt}). The volume (V_{Pt}) was 9.16 × 10⁻²⁶m³ per particle.
(3) The volume of Pt (V_{Pt}) was multiplied by the density of Pt (d_{Pt}) to obtain the weight of Pt (m_{Pt}) required for one Pd-Pt colloidal particle. The weight (m_{Pt}) was 1.96 × 10⁻²¹ kg per particle when d_{Pt} = 21450 kg/m³ was used.
(4) The weight of the Pt (m_{Pt}) in one Pd-Pt colloidal particle was multiplied by the number of Pt colloidal particles per liter (N_{Pd}) to obtain the weight concentration of Pt (M_{Pt}) required. The weight concentration of Pt (M_{Pt}) was 6.24 × 10⁻⁵ kg/L = 62.4 mg/L.

In the present example, the Pd-Pt colloidal solution was prepared so that the weight concentration of Pt was 62.4 mg/L.

For the Pd-Pt colloidal solution thus obtained, the catalytic performance for hydrogen peroxide decomposition (hydrogen peroxide decomposition activity) was measured. First, 10 mL of 30 wt% hydrogen peroxide solution was poured into a 50 mL Erlenmeyer flask, and heated in a hot bath at 50°C under stirring with a stirrer for 5 minutes. Then, 100 µL of the prepared Pd-Pt colloidal solution was added, and the amount of oxygen generated in 45 seconds was measured with a flowmeter. As a result, the amount of generated oxygen was 0.17 L. This amount is 2.8 times the amount of oxygen generated in a Pt colloidal solution containing the same weight of Pt (of Comparative Example 1 below).

### (Example 2)

A Pd-Pt colloidal solution was prepared in the same manner as in Example 1, except that 713.36 g of pure water was used for the preparation of a Pd colloidal solution, 8.09 g of Pt precursor solution (chloroplatinic acid aqueous solution) was used, and 27.3 g of sodium citrate solution was used for the reduction of Pt. 70 g of ion exchange resin was used after the Pd colloidal solution was prepared, and 68 g of ion exchange resin was used after Pt was supported on the Pd colloidal particles. The average particle diameter of the Pd colloidal particles was obtained in the same manner as in Example 1. In the present example, the average particle diameter of the Pd colloidal particles was 10 nm. In the present example, the weight concentration of Pt in the Pd-Pt colloidal solution was determined so that the amount of Pt was 2 atomic layers thick. The weight concentration of Pt was determined in the same manner as in Example 1. As the thickness of 2 atomic layers of Pt, (1 + 3^{1/2}/2) × the diameter of a Pt atom (0.276 nm) was used.

For the Pd-Pt colloidal solution thus obtained, the hydrogen peroxide decomposition activity was measured in the same manner as in Example 1. The amount of the Pd-Pt colloidal solution used for the measurement was 51 µL. As a result, the amount of oxygen generated in 45 seconds was 0.13 L. This amount is 2.2 times the amount of oxygen generated in a Pt colloidal solution containing the same weight of Pt (of Comparative Example 1 below).

### (Example 3)

A Pd-Pt colloidal solution was prepared in the same manner as in Example 1, except that 744.94 g of pure water was used for the preparation of a Pd colloidal solution, 10 g of sodium citrate solution was used for the reduction of Pd, 2.01 g of Pt precursor solution (chloroplatinic acid aqueous solution) was used, and 6.8 g of sodium citrate solution was used for the reduction of Pt. 55 g of ion exchange resin was used after the Pd colloidal solution was prepared, and 18 g of ion exchange resin was used after Pt was supported on the Pd colloidal particles. The average particle diameter of the Pd colloidal particles was obtained in the same manner as in Example 1. In the present example, the average particle diameter of the Pd colloidal particles was 20 nm. In the present example, the weight concentration of Pt in the Pd-Pt colloidal solution was determined so that the amount of Pt was 1 atomic layer thick. The weight concentration of Pt was determined in the same manner as in Example 1.

For the Pd-Pt colloidal solution thus obtained, the hydrogen peroxide decomposition activity was measured in the same manner as in Example 1. The amount of the Pd-Pt colloidal solution used for the measurement was 206 µL. As a result, the amount of oxygen generated in 45 seconds was 0.12 L. This amount is 2.0 times the amount of oxygen generated in a Pt colloidal solution containing the same weight of Pt (of Comparative Example 1 below).

### (Example 4)

A Pd-Pt colloidal solution was prepared in the same manner as in Example 1, except that 496.22 g of pure water was used for the preparation of a Pd colloidal solution, 400 g of Pd precursor solution (palladium chloride solution) was used, 30 g of sodium citrate solution was used for the reduction of Pd, 2.5 g of potassium carbonate solution was used as a reaction accelerator, 8.28 g of Pt precursor solution (chloroplatinic acid aqueous solution) was used, and 28.0 g of sodium citrate solution was used for the reduction of Pt. 149 g of ion exchange resin was used after the Pd colloidal solution was prepared, and 70 g of ion exchange resin was used after Pt was supported on the Pd colloidal particles. The average particle diameter of the Pd colloidal particles was obtained in the same manner as in Example 1. In the present example, the average particle diameter of the Pd colloidal particles was 10 nm. In the present example, the weight concentration of Pt in the Pd-Pt colloidal solution was determined so that the amount of Pt was 1 atomic layer thick. The weight concentration of Pt was determined in the same manner as in Example 1.

For the Pd-Pt colloidal solution thus obtained, the hydrogen peroxide decomposition activity was measured in the same manner as in Example 1. The amount of the Pd-Pt colloidal solution used for the measurement was 50 µL. As a result, the amount of oxygen generated in 45 seconds was 0.15 L. This amount is 2.7 times the amount of oxygen generated in a Pt colloidal solution containing the same weight of Pt (of Comparative Example 1 below).

### (Example 5)

A Pd-Pt colloidal solution was prepared in the same manner as in Example 1, except that 739.74 g of pure water was used for the preparation of a Pd colloidal solution, 2.01 g of Pt precursor solution (chloroplatinic acid aqueous solution) was used, and 7.0 g of sodium citrate solution was used for the reduction of Pt. 70 g of ion exchange resin was used after the Pd colloidal solution was prepared, and 18 g of ion exchange resin was used after Pt was supported on the Pd colloidal particles. The average particle diameter of the Pd colloidal particles was obtained in the same manner as in Example 1. In the present example, the average particle diameter of the Pd colloidal particles was 10 nm. In the present example, the weight concentration of Pt in the Pd-Pt colloidal solution was determined so that the amount of Pt was 0.5 atomic layer thick. First, the weight concentration of 1 atomic layer-thick Pt was determined in the same manner as in Example 1. Next, the weight concentration of 1 atomic layer-thick Pt was multiplied by 0.5 to obtain the weight concentration of Pt required to form a 0.5 atomic layer.

For the Pd-Pt colloidal solution thus obtained, the hydrogen peroxide decomposition activity was measured in the same manner as in Example 1. The amount of the Pd-Pt colloidal solution used for the measurement was 200 µL. As a result, the amount of oxygen generated in 45 seconds was 0.12 L. This amount is 2.0 times the amount of oxygen generated in a Pt colloidal solution containing the same weight of Pt (of Comparative Example 1 below).

### (Example 6)

A Pd-Pt colloidal solution was prepared in the same manner as in Example 1, except that 735.14 g of pure water was used for the preparation of a Pd colloidal solution, 3.11 g of Pt precursor solution (chloroplatinic acid aqueous solution) was used, and 10.5 g of sodium citrate solution was used for the reduction of Pt. 70 g of ion exchange resin was used after the Pd colloidal solution was prepared, and 26 g of ion exchange resin was used after Pt was supported on the Pd colloidal particles. The average particle diameter of the Pd colloidal particles was obtained in the same manner as in Example 1. In the present example, the average particle diameter of the Pd colloidal particles was 10 nm. In the present example, the weight concentration of Pt in the Pd-Pt colloidal solution was determined so that the amount of Pt was 0.75 atomic layer thick. First, the weight concentration of 1 atomic layer-thick Pt was determined in the same manner as in Example 1. Next, the weight concentration of 1 atomic layer-thick Pt was multiplied by 0.75 to obtain the weight concentration of Pt required to form a 0.75 atomic layer.

For the Pd-Pt colloidal solution thus obtained, the hydrogen peroxide decomposition activity was measured in the same manner as in Example 1. The amount of the Pd-Pt colloidal solution used for the measurement was 133 µL. As a result, the amount of oxygen generated in 45 seconds was 0.19 L. This amount is 3.2 times the amount of oxygen generated in a Pt colloidal solution containing the same weight of Pt (of Comparative Example 1 below).

### (Example 7)

A Pd-Pt colloidal solution was prepared in the same manner as in Example 1, except that 733.25 g of pure water was used for the preparation of a Pd colloidal solution, 50 g of 2 wt% gallic acid solution was used as a reducing agent for the reduction of Pd, 1.0 g of potassium carbonate solution was used as a reaction accelerator, 4.14 g of Pt precursor solution (chloroplatinic acid aqueous solution) was used, and 10 g of 8.1 wt% gallic acid solution was used as a reducing agent for the reduction of Pt. 23 g of ion exchange resin was used after the Pd colloidal solution was prepared, and 15 g of ion exchange resin was used after Pt was supported on the Pd colloidal particles. The average particle diameter of the Pd colloidal particles was obtained in the same manner as in Example 1. In the present example, the average particle diameter of the Pd colloidal particles was 10 nm. In the present example, the weight concentration of Pt in the Pd-Pt colloidal solution was determined so that the amount of Pt was 1 atomic layer thick, in the same manner as in Example 1.

For the Pd-Pt colloidal solution thus obtained, the hydrogen peroxide decomposition activity was measured in the same manner as in Example I. The amount of the Pd-Pt colloidal solution used for the measurement was 100 µL. As a result, the amount of oxygen generated in 45 seconds was 0.15 L. This amount is 2.7 times the amount of oxygen generated in a Pt colloidal solution containing the same weight of Pt (of Comparative Example 1 below).

### (Comparative Example 1)

26.6 g of 4 wt% chloroplatinic acid was poured into a 1 L round-bottom flask, and pure water was added to obtain 951.8 g of an aqueous solution. A cooling tube was attached to the flask, and the solution was boiled under reflux for 60 minutes while being heated by a mantle heater. 48.2 g of 10 wt% sodium citrate aqueous solution was added thereto and boiling under reflux was continued. After about 5 minutes, the solution rapidly turned from light orange to black. The resulting solution was further refluxed for one hour. Thus, a Pt colloidal solution was prepared. The Pt colloidal solution thus prepared was ion-exchanged with an ion exchange resin (Amberlite MB-1 (manufactured by Organo Corporation)) to remove impurities. For the Pt colloidal solution of Comparative Example 1 thus obtained, the hydrogen peroxide decomposition activity was measured in the same manner as in Example 1. The amount of the Pt colloidal solution used for the measurement was 19 µL. As a result, the amount of oxygen generated in 45 seconds was 0.06 L.

### (Comparative Example 2)

After a sodium citrate solution for the reduction of Pt was added, the resulting solution was boiled under reflux for 30 minutes. Then, 624 mg of PVP (polyvinyl pyrrolidone having an average molecular weight of 40000) was dissolved in 2 mL of pure water, and the resulting solution was added to the reaction system during boiling under reflux. The boiling under reflux was continued for further 30 minutes. Thus, the Pd-Pt colloidal solution was obtained in the same manner as in Example 1 except for the details described above. Also in the present comparative example, the average particle diameter of the Pd colloidal particles was obtained in the same manner as in Example 1. The average particle diameter of the Pd colloidal particles was 10 nm. In the present comparative example, the weight concentration of Pt in the Pd-Pt colloidal solution was determined so that the amount of Pt was 1 atomic layer thick. The weight concentration of Pt was determined in the same manner as in Example 1.

For the Pd-Pt colloidal solution thus obtained, the hydrogen peroxide decomposition activity was measured in the same manner as in Example 1. The amount of the Pd-Pt colloidal solution used for the measurement was 100 µL. As a result, the amount of oxygen generated in 45 seconds was 0.06 L. This amount is 1.0 times the amount of oxygen generated in the Pt colloidal solution containing the same weight of Pt (of Comparative Example 1).

### (Comparative Example 3)

A Pd-Pt colloidal solution was prepared in the same manner as in Example 1, except that 692.45 g of pure water was used for the preparation of a Pd colloidal solution, 12.4 g of Pt precursor solution (chloroplatinic acid aqueous solution) was used, and 41.9 g of sodium citrate solution was used for the reduction of Pt. 70 g of ion exchange resin was used after the Pd colloidal solution was prepared, and 105 g of ion exchange resin was used after Pt was supported on the Pd colloidal particles. Also in the present comparative example, the average particle diameter of the Pd colloidal particles was obtained in the same manner as in Example 1. The average particle diameter of the Pd colloidal particles was 10 nm. In the present comparative example, the weight concentration of Pt in the Pd-Pt colloidal solution was determined so that the amount of Pt was 3 atomic layers thick. The weight concentration of Pt was determined in the same manner as in Example 1. As the thickness of 3 atomic layers of Pt, (1 + 3^{1/2}) × the diameter of a Pt atom (0.276 nm) was used.

For the Pd-Pt colloidal solution thus obtained, the hydrogen peroxide decomposition activity was measured in the same manner as in Example 1. The amount of the Pd-Pt colloidal solution used for the measurement was 33 µL. As a result, the amount of oxygen generated in 45 seconds was 0.08 L. This amount is 1.3 times the amount of oxygen generated in the Pt colloidal solution containing the same weight of Pt (of Comparative Example 1).

### (Comparative Example 4)

A Pd-Pt colloidal solution was prepared in the same manner as in Example 1, except that 695.51 g of pure water was used for the preparation of a Pd colloidal solution, 30 g of sodium citrate solution was used for the reduction of Pd, 8.74 g of Pt precursor solution (chloroplatinic acid aqueous solution) was used, and 29.5 g of sodium citrate solution was used for the reduction of Pt. 140 g of ion exchange resin was used after the Pd colloidal particles were prepared, and 75 g of ion exchange resin was used after Pt was supported on the Pd colloidal particles. Also in the present comparative example, the average particle diameter of the Pd colloidal particles was obtained in the same manner as in Example 1. The average particle diameter of the Pd colloidal particles was 5 nm. In the present comparative example, the weight concentration of Pt in the Pd-Pt colloidal solution was determined so that the amount of Pt was 1 atomic layer thick. The weight concentration of Pt was determined in the same manner as in Example 1.

For the Pd-Pt colloidal solution thus obtained, the hydrogen peroxide decomposition activity was measured in the same manner as in Example 1. The amount of the Pd-Pt colloidal solution used for the measurement was 47 µL. As a result, the amount of oxygen generated in 45 seconds was 0.10 L. This amount is 1.7 times the amount of oxygen generated in the Pt colloidal solution containing the same weight of Pt (of Comparative Example 1).

### (Comparative Example 5)

A Pd-Pt colloidal solution was prepared in the same manner as in Example 1, except that 600.33 g of pure water was used for the preparation of a Pd colloidal solution, 60 g of sodium citrate solution was used for the reduction of Pd, 70 g of tannic acid solution was used, 15.62 g of Pt precursor solution (chloroplatinic acid aqueous solution) was used, and 52.8 g of sodium citrate solution was used for the reduction of Pt. 280 g of ion exchange resin was used after the Pd colloidal particles were prepared, and 135 g of ion exchange resin was used after Pt was supported on the Pd colloidal particles. Also in the present comparative example, the average particle diameter of the Pd colloidal particles was obtained in the same manner as in Example 1. The average particle diameter of the Pd colloidal particles was 3 nm. In the present comparative example, the weight concentration of Pt in the Pd-Pt colloidal solution was determined so that the amount of Pt was 1 atomic layer thick. The weight concentration of Pt was determined in the same manner as in Example 1.

For the Pd-Pt colloidal solution thus obtained, the hydrogen peroxide decomposition activity was measured in the same manner as in Example 1. The amount of the Pd-Pt colloidal solution used for the measurement was 27 µL. As a result, the amount of oxygen generated in 45 seconds was 0.07 L. This amount is 1.2 times the amount of oxygen generated in the Pt colloidal solution containing the same weight of Pt (of Comparative Example 1).

### (Comparative Example 6)

A Pd-Pt colloidal solution was prepared in the same manner as in Example 1, except that 748.75 g of pure water was used for the preparation of a Pd colloidal solution, 8 g of sodium citrate solution was used for the reduction of Pd, 1.6 g of Pt precursor solution (chloroplatinic acid aqueous solution) was used, and 5.4 g of sodium citrate solution was used for the reduction of Pt. 40 g of ion exchange resin was used after the Pd colloidal particles were prepared, and 15 g of ion exchange resin was used after Pt was supported on the Pd colloidal particles. Also in the present comparative example, the average particle diameter of the Pd colloidal particles was obtained in the same manner as in Example 1. The average particle diameter of the Pd colloidal particles was 25 nm. In the present comparative example, the weight concentration of Pt in the Pd-Pt colloidal solution was determined so that the amount of Pt was 1 atomic layer thick. The weight concentration of Pt was determined in the same manner as in Example 1.

For the Pd-Pt colloidal solution thus obtained, the hydrogen peroxide decomposition activity was measured in the same manner as in Example 1. The amount of the Pd-Pt colloidal solution used for the measurement was 259 µL. As a result, the amount of oxygen generated in 45 seconds was 0.04 L. This amount is 0.7 times the amount of oxygen generated in the Pt colloidal solution containing the same weight of Pt (of Comparative Example 1).

### (Comparative Example 7)

A Pd-Pt colloidal solution was prepared in the same manner as in Example 1, except that 744.24 g of pure water was used for the preparation of a Pd colloidal solution, 1.01 g of Pt precursor solution (chloroplatinic acid aqueous solution) was used, and 3.5 g of sodium citrate solution was used for the reduction of Pt. 70 g of ion exchange resin was used after the Pd colloidal solution was prepared, and 18 g of ion exchange resin was used after Pt was supported on the Pd colloidal particles. Also in the present comparative example, the average particle diameter of the Pd colloidal particles was obtained in the same manner as in Example 1. The average particle diameter of the Pd colloidal particles was 10 nm. In the present comparative example, the weight concentration of Pt in the Pd-Pt colloidal solution was determined so that the amount of Pt was 0.25 atomic layer thick. First, the weight concentration of 1 atomic layer-thick Pt was determined in the same manner as in Example 1. Next, the weight concentration of 1 atomic layer-thick Pt was multiplied by 0.25 to obtain the weight concentration of Pt required to form a 0.25 atomic layer.

For the Pd-Pt colloidal solution thus obtained, the hydrogen peroxide decomposition activity was measured in the same manner as in Example 1. The amount of the Pd-Pt colloidal solution used for the measurement was 400 µL. As a result, the amount of oxygen generated in 45 seconds was 0.10 L. This amount is 1.7 times the amount of oxygen generated in the Pt colloidal solution containing the same weight of Pt (of Comparative Example 1).

The results of Examples 1 to 7 and Comparative Examples 1 to 7 are shown collectively in Table 1.

**Table 1**

| | Example 1 | Example 2 | Example 3 | Example 4 | Example 5 | Example 6 | Example 7 | Com. Example 1 | Com. Example 2 | Com. Example 3 | Com. Example 4 | Com. Example 5 | Com. Example 6 | Com. Example 7 |
|---|---|---|---|---|---|---|---|---|---|---|---|---|---|---|
| | | | | | | | | Pt alone | with protective colloid | | | | | |
| Average particle diameter of core (Pd) (nm) | 10 | 10 | 20 | 10 | 10 | 10 | 10 | | 10 | 10 | 5 | 3 | 25 | 10 |
| Concentration of core (Pd) (mg/L) Number of Pt | 200 | 200 | 200 | 400 | 200 | 200 | 200 | | 200 | 200 | 200 | 200 | 200 | 200 |
| atomic layers | 1 | 2 | 1 | 1 | 0.5 | 0.75 | 1 | | 1 | 3 | 1 | 1 | 1 | 0.25 |
| Weight concentration of Pt in Pd-Pt colloidal solution (mg/L) | 62.4 | 121.9 | 30.3 | 124.7 | 31.2 | 46.8 | 62.4 | 324 | 62.4 | 186.9 | 131.6 | 2:35.3 | 24.1 | 15.6 |
| PVP (Protective colloid) (ppm) | - | - | - | - | - | - | - | | 624 | - | - | - | - | - |
| | | | | | | | | | | | | | | |
| <Preparation of colloid> | | | | | | | | | | | | | | |
| Pure water (g) | 730.61 | 713.36 | 744.94 | 496.22 | 739.74 | 735.14 | 733.25 | | 730.61 | 692.45 | 695.51 | 600.33 | 74878 | 74424 |
| 1 g/L Pd precursor (g) | 200 | 200 | 200 | 400 | 200 | 200 | 200 | | 200 | 200 | 200 | 200 | 200 | 200 |
| 10 wt% sodium citrate solution (g) | 15 | 15 | 10 | 30 | 15 | 15 | - | | 15 | 15 | 30 | 60 | 8 | 15 |
| 1.43 wt% tannic acid solution (g) | 35 | 35 | 35 | 35 | 35 | 35 | - | | 35 | 35 | 35 | 70 | 35 | 35 |
| 2 wit% gallic acid solution (g) 13.82 (1 | - | - | - | - | - | - | 50 | | - | - | - | - | - | - |
| wt% mol/L) potassium carbonate solutions (g) | 1.25 | 1.25 | 1.25 | 2.5 | 1.25 | 1.25 | 1.0 | | 1.25 | 1.25 | 1.25 | 1.25 | 1.25 | 1.25 |
| Ion exchange resin (g) | 70 | 70 | 55 | 149 | 70 | 70 | 23 | | 70 | 70 | 140 | 280 | 40 | 70 |
| For reduction of Pt | | | | | | | | | | | | | | |
| 4 wt% chloroplatinic acid solution (g) | 4.14 | 8.09 | 2.01 | 8.28 | 2.01 | 3.11 | 4.14 | | 4.14 | 12.4 | 8.74 | 15.62 | 1.6 | 1.01 |
| 10 wt% sodium citrate solution (g) | 14 | 27.3 | 6.8 | 28 | 7.0 | 10.5 | - | | 14 | 41.9 | 29.5 | 52.8 | 5.4 | 3.5 |
| 8.1 wt% gallic acid solution (g) | - | - | - | - | - | - | 10 | | - | - | - | - | - | - |
| Ion exchange resin (g) | 36 | 68 | 18 | 70 | 18 | 26 | 15 | | 36 | 105 | 75 | 135 | 15 | 18 |
| | | | | | | | | | | | | | | |
| <Measurement of activity> | | | | | | | | | | | | | | |
| Amount of measured solution (µL) | 100 | 51 | 206 | 50 | 200 | 133 | 100 | 19 | 100 | 33 | 47 | 27 | 259 | 400 |
| Activity (Amount of O₂ generated in 45 seconds (L)) | 0.17 | 0.13 | 0.12 | 0.15 | 0.12 | 0.19 | 0.15 | 0.06 | 0.06 | 0.08 | 0.10 | 0.07 | 0.04 | 0.10 |
| Activity ratio (Ratio of above O₂ generation amount to O₂ generation amount in Pt colloidal solution containing the same weight of Pt) | 2.8 | 2.2 | 2.0 | 2.7 | 2.0 | 3.2 | 2.7 | | 1.0 | 1.3 | 1.7 | 1.2 | 0.7 | 1.7 |

The hydrogen peroxide decomposition activity levels of Examples 1 to 7 and Comparative Examples 1 to 7 were compared. The Pd-Pt colloidal solution of Comparative Example 2 containing protective colloids had a lower activity level than the Pd-Pt colloidal solutions of Example 1 and Example 4 having the same average particle diameter of Pd colloidal particles and the same number of Pt atomic layers. Presumably, this is because the Pd-Pt colloidal solution of Comparative Example 1 could not provide sufficient contact between Pt and hydrogen peroxide due to the presence of protective colloids and therefore could not exhibit efficient catalytic activity. The Pd-Pt colloidal solution of Comparative Example 3 having 3 Pt atomic layers also could not exhibit efficient catalytic activity because the number of Pt atomic layers exceeded 2. Comparative Examples 4 to 6 generated smaller amounts of oxygen per unit weight of Pt because the average particle diameters of Pd colloidal particles were outside the range of 7 to 20 nm. It is not clear why Comparative Example 7 could not exhibit efficient catalytic activity, but presumably, a portion of the Pd colloid that was not coated with Pt had a negative effect on the decomposition of hydrogen peroxide. In contrast, the Pd-Pt colloidal solutions of Examples 1 to 7 showed activity ratios of 2.0 or higher because they fall within the range of average Pd colloidal particle diameters of 7 to 20 nm and the range of numbers of Pt atomic layers of 0.5 to 2, and it was confirmed that they exhibited high catalytic activity Furthermore, the Pd-Pt colloidal solutions of Examples 1 to 7 exhibited higher catalytic activity than the colloidal solution of Pt alone of Comparative Example 1.

### INDUSTRIAL APPLICABILITY

Since the noble metal colloidal particles and the noble metal colloidal solution of the present invention can achieve high catalytic activity efficiently with a smaller amount of Pt, they can be used as a catalyst for hydrogen peroxide decomposition in a wide variety of fields.

## Claims

1. Noble metal colloidal particles each comprising: a Pd colloidal particle; and Pt supported on the surface of the Pd colloidal particle, wherein
the noble metal colloidal particles are substantially free from a protective colloid,
the Pd colloidal particles have an average particle diameter of 7 to 20 nm, and
the amount of the Pt supported on the surface of the Pd colloidal particle is 0.5 to 2 atomic layers thick, when the amount is expressed as the number of atomic layers of the Pt.

2. A noble metal colloidal solution comprising: a solvent; and noble metal colloidal particles dispersed in the solvent, wherein
the noble metal colloidal particles are noble metal colloidal particles according to claim 1.

3. A catalyst for hydrogen peroxide decomposition, comprising noble metal colloidal particles according to claim 1.
